Europäisches Patentamt

European Patent Office

Office européen des brevets

(11) Veröffentlichungsnummer: **0 264 071**
**A2**

# (12) EUROPÄISCHE PATENTANMELDUNG

(21) Anmeldenummer: 87114716.1

(22) Anmeldetag: 08.10.87

(51) Int. Cl.4: **B60C 9/00**

(30) Priorität: 16.10.86 DE 3635298

(43) Veröffentlichungstag der Anmeldung:
20.04.88 Patentblatt 88/16

(84) Benannte Vertragsstaaten:
AT BE CH DE ES FR GB GR IT LI LU NL SE

(71) Anmelder: Akzo N.V.
Postbus 186 Velperweg 76
NL-6800 LS Arnhem(NL)

(72) Erfinder: Weidenhaupt, Wolfgang, Dr.
Nikolaus-Otto-Strasse 13
D-5140 Erkelenz(DE)

(74) Vertreter: Fett, Günter
Akzo GmbH Kasinostrasse 19-23
D-5600 Wuppertal 1(DE)

(54) **Luftreifen mit Flachcorden.**

(57) Luftreifen mit mindestens einem aus mehreren Stahldrähten zusammengesetzten, flach ausgebildeten Verstärkungscord, der eine längere und eine kürzere Querschnittsdimension aufweist, wobei der Verstärkungscord aus einem flachen, ungedrehten Kern besteht, um welchen mindestens sechs Einzeldrähte geschlagen sind, dadurch gekennzeichnet, daß der flache Verstärkungscord (6, 7) im Gürtel und/oder in der Decke derart angeordnet ist, daß die größere Querschnittsdimension des Verstärkungscordes zumindest annähernd parallel zur Gürtel-bzw. Deckenkontur angeordnet ist. Der Kern kann aus mehreren meist runden Stahlcorden zusammengesetzt sein, oder er besteht aus einem flachen Stahldraht (10).

Fig. 2

EP 0 264 071 A2

## Luftreifen mit Flachcorden

Die Erfindung betrifft einen Luftreifen mit mindestens einem aus mehreren Stahldrähten zusammengesetzten, flach ausgebildeten Verstärkungscord, der eine längere und eine kürzere Querschnittsdimension aufweist, wobei der Verstärkungscord aus einem flachen, ungedrehten Kern besteht, um welchen mindestens sechs Einzeldrähte geschlagen sind.

Ein solcher Luftreifen ist aus der US-PS 1,774,748 bekannt. Bei dem bekannten Luftreifen ist der flache Verstärkungscord lediglich für den Wulst des Luftreifens (Bead of automobile shoe) bestimmt.

Weiterhin sind aus der DE-OS 33 17 712 Verstärkungscorde für den Gürtel und/oder die Decke von Luftreifen bekannt geworden, die einen möglichst kompakten Querschnitt mit geringer Schwankungsbreite des Durchmessers aufweisen sollen, wobei der Kern dieser bekannten Verstärkungscorde aus flachen Drähten aufgebaut ist, die zusammen verdreht wurden. Der Kern soll zur Erreichung des kompakten Quer - schnitts möglichst quadratischen Querschnitt aufweisen, weshalb im Falle von einem einzigen Draht als Kern ein Draht mit quadratischem Querschnitt empfohlen wird. Der Kern soll hierbei zur Steigerung der Bruchdehnung in sich verdreht sein. Corde mit höherer Bruchdehnung werden lediglich für Spezialfälle eingesetzt. An die heutigen Luftreifen wird die Forderung gestellt, daß sie hinsichtlich Ermüdungsverhalten, dynamischer Beanspruchbarkeit und Formstabilität möglichst gute Ergebnisse aufweisen.

Bei den bisher hergestellten Kompact-Corden konnte das Ermüdungsverhalten und die dynamische Beanspruchbarkeit zwar gesteigert werden, wobei gleichzeitig jedoch ein Absinken der Formstabilität in Kauf genommen wurde. Es war auch möglich, die Formstabilität der Luftreifen zu steigern, wobei zumindest eine Reduzierung der dynamischen Beanspruchbarkeit in Kauf genommen werden mußte.

Es sind auch Flachkorde bekannt geworden, die aus mindestens zwei Flachdrähten rechteckigen Querschnitts bestehen, die mit Hilfe eines einzelnen Umschlingungsdrahtes zusammengehalten werden (EP-A-135 462). Beim Einbetten solcher Corde in das elastomere Material des Reifens penetriert das elastomere Material in den Cord nur unvollständig. Speziell kann das elastomere Material zwischen zwei benachbarte Einzeldrähte nicht eindringen, weil diese formschlüssig aufeinanderliegen, und zusätzlich der Umschlingungsdraht ein Auseinanderdrängen benachbarter Flachdrähte stark behindert. Beim Einbau der bekannten Flachdrähte in einen Reifen, ergibt sich metallische Reibung zwischen den Flachdrähten, wodurch die Ermüdungseigenschaften des Reifens negativ beeinflußt werden. Außerdem bewirken die - scharfen Kanten der Flachdrähte bei dynamischer Beanspruchung des Reifens ein Aufreißen des elastomeren Materials entlang dieser Kanten, wodurch Kapillarkorrosion bei den Verstärkungscorden verstärkt auftritt.

Aufgabe der vorliegenden Erfindung ist es, unter Vermeidung der oben beschriebenen Nachteile einen Luftreifen der eingangs genannten Art zur Verfügung zu stellen, bei dem gleichzeitig gute Ermüdungswerte, gute Formstabilität, gute dynamische Beanspruchbarkeit und weitgehende Vermeidung von Kapillarkorrosion der in den Luftreifen eingebetteten Verstärkungscorde gewährleistet ist.

Diese Aufgabe wird bei einem Luftreifen der eingangs genannten Art dadurch gelöst, daß der flache Verstärkungscord im Gürtel und/oder in der Decke derart angeordnet ist, daß die größere Querschnittsdimension des Verstärkungscordes zumindest annähernd parallel zur Gürtel-bzw. Deckenkontur angeordnet ist.

Wenn man einen aus einem Reifen herausgeschnittenen Reifenabschnitt derart verformt, daß dieser Reifenabschnitt formschlüssig auf einer ebenen Fläche aufliegt, dann ist im kompletten Reifen die größere Abmessung des Verstärkungscord-Querschnitts immer dann zumindest annähernd parallel zur Gürtel-bzw. Deckenkontur angeordnet, wenn im verformten Reifenabschnitt die größere Abmessung des Verstärkungscord-Querschnitts zumindest annähernd parallel zu dieser ebenen Fläche angeordnet ist.

Obwohl flache Verstärkungscorde im Wulst des Luftreifens seit langem bekannt waren, wurden diese Verstärkungscorde noch nie zur Verstärkung des Gürtels und/oder der Decke des Luftreifens eingesetzt. Es wurde festgestellt, daß durch den erfindungsgemäßen Luftreifen nicht nur die gestellte Aufgabe optimal gelöst wird, sondern auch eine Optimierung des Druckmoduls in lateraler Richtung des Luftreifens bei gleichzeitiger Materialeinsparung erfolgt.

Der Kern kann aus zwei oder mehr runden Stahldrähten oder aus einem flachen Stahldraht zusammengesetzt sein. Auf diese Weise können einfach flache Verstärkungscorde, die sich für den erfindungsgemäßen Einsatzzweck eignen, hergestellt werden.

Für die Abmessungen des Kerns hat es sich als besonders günstig herausgestellt, wenn das Verhältnis der längeren zur kürzeren Dimension des Querschnitts des Kerns zwischen 4 : 1 und 1,5 : 1 liegt.

In der Regel reicht es aus, wenn die um den Kern geschlagenen Einzeldrähte runden Querschnitt aufweisen.

Die erfindungsgemäße Aufgabe wird jedoch besonders gut gelöst, wenn auch die um den Kern geschlagenen Einzeldrähte abgeflacht sind. Auch bei den Einzeldrähten hat sich ein Verhältnis der längeren zur kürzeren Abmessung zwischen 4 : 1 und 1,5 : 1 bestens bewährt.

Bevorzugt weisen der Kern und/oder die abgeflachten Einzeldrähte elliptischen Querschnitt oder einen annähernd rechteckigen Querschnitt, dessen Ecken gerundet sind, auf.

Günstig ist es auch, wenn die abgeflachten Drähte des Kerns und/oder die abgeflachten Einzeldrähte durch Flachwalzen runder Stahldrähte hergestellt sind. Hierbei kann das Flachwalzen der runden Drähte derart durchgeführt worden sein, daß in Breitenrichtung, also quer zu Laufrichtung der Drähte auf einen Formzwang verzichtet wird, so daß das Stahldrahtmaterial in dieser Richtung frei fließen kann. Auf diese Weise ergibt sich eine stark ballige Ausbildung der schmaleren Seiten des Querschnitts.

Um die Flachheit der erfindungsgemäß in den Reifen eingebetteten Corde besonders günstig auszuführen, ist es von Vorteil, wenn die breitere Seite des Einzeldrahtquerschnitts den Kern ständig berührt. Die Flachheit dieses Cordes kann dadurch auch erhöht werden, daß der fertige Verstärkungscord vor dem Einbetten zusätzlich flachgewalzt wird.

Bei den bisher beschriebenen Luftreifen mit darin eingebetteten Verstärkungscorden ergibt sich ein hervorragender Einschluß der Einzeldrähte und auch des Kerns in das elastomere Material.

In manchen Fällen kann es erforderlich sein, bei den erfindungsgemäß eingesetzten Verstärkungscorden darauf zu achten, daß sich die um den Kern geschlagenen Einzeldrähte nicht berühren. Hierbei hat es sich als zweckmäßig erwiesen, wenn der Abstand benachbarter Einzeldrähte zwischen 4 und 12%, bevorzugt 8%, ihres Drahtdurchmessers beträgt. Bei abgeflachten Einzeldrähten ist hierbei der Durchmesser anzunehmen, der sich für einen runden Draht gleicher Querschnittsfläche ergibt. Hat der abgeflachte Einzeldraht eine Querschnittsfläche A, ergibt sich der Durchmesser D dieses Einzeldrahts zu D $= \sqrt{4\ A/\pi}$. Der Abstand soll dann bei abgeflachten Einzeldrähten bei

$$(0,04 \div 0,12) \times \sqrt{4\ A/\pi},$$

bevorzugt bei

$$0,08 \times \sqrt{4\ A/\pi}$$

liegen.

Bei den erfindungsgemäß eingesetzten Verstärkungscorden hat sich eine Schlaglänge für die Einzeldrähte von 10 bis 20 mm bestens bewährt. Auch ist es möglich, wenn zumindest ein Teil Verstärkungscorde jeweils von mindestens einem Umschlingungsdraht wendelförmig umwickelt ist.

Die Erfindung wird anhand der nachfolgenden Figuren und Beispiele näher erläutert:

Es zeigen:

Figur 1 schematisch einen Ausschnitt aus einem erfindungsgemäßen Luftreifen,

Figur 2 den Schnitt AA gemäß Figur 1,

Figur 3 den schematischen Querschnitt eines erfindungsgemäß eingesetzten Verstärkungscordes,

Figur 4 den schematischen Querschnitt eines erfindungsgemäß eingesetzten Verstärkungscordes mit abgeflachten Einzeldrähten,

Figur 5 den schematischen Querschnitt eines erfindungsgemäß eingesetzten flachgewalzten Verstärkungscordes mit ursprünglich runden Einzeldrähten.

Figur 6 den schematischen Querschnitt eines erfindungsgemäß eingesetzten Verstärkungscordes, dessen Kern drei nebeneinandergelegte runde Drähte aufweist.

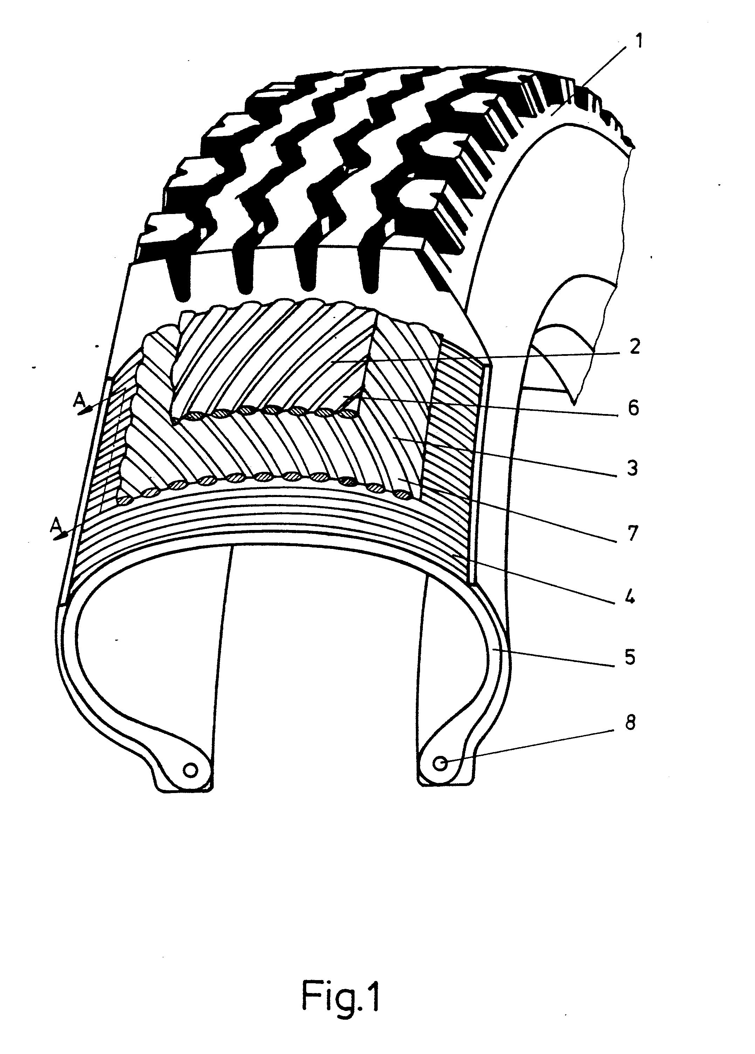

Figur 1 zeigt schematisch einen Ausschnitt aus einem erfindungsgemäßen Luftreifen. In diesem Ausschnitt sind einzelne Lagen, aus denen der Luftreifen besteht, teilweise herausgeschnitten, um den Aufbau eines solchen Luftreifens zu verdeutlichen. Mit 1 ist die Lauffläche des Reifens bezeichnet, welcher in der gezeigten Ausführung als Radialreifen ausgebildet ist. Die Lauffläche 1 wird im vorliegenden Fall durch einen Gürtel verstärkt, der aus zwei Lagen 2 und 3 besteht. In die Lage 2 sind Verstärkungscorde 6, in die Lage 3 sind Verstärkungscorde 7 eingebettet. Im Ausschnitt ist weiterhin eine Decke 5 sichtbar, in welche Verstärkungscorde 8 eingebettet sind. Im Wulst 8 sind weitere Verstärkungscorde eingebettet. Die Verstärkungscorde 6 und 7 sind als flache Verstärkungscorde ausgebildet, wobei deren größere Abmessung parallel zur Gürtel-bzw. Decken-Kontur angeordnet ist. In Figur 1 sind die erfindungsgemäß eingesetzten flachen Verstärkungscorde lediglich schematisch durch ihre Außenkontur dargestellt. Die Umlaufrichtung der Verstärkungscorde 6, 7 oder 8 im Reifen hängt vom Einsatzgebiet des Reifens ab.

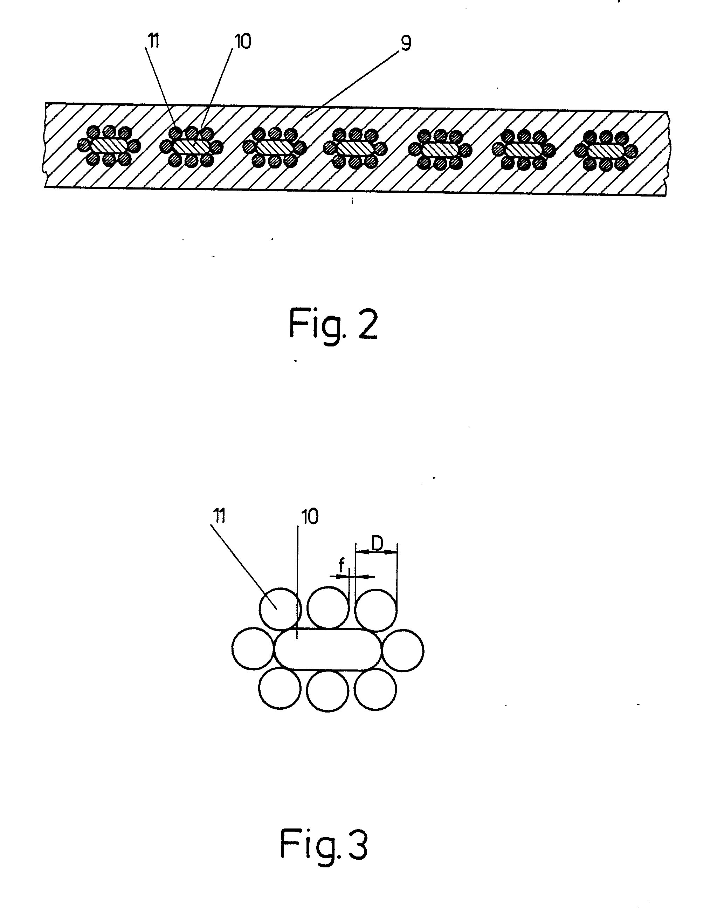

In Figur 2 ist der Schnitt AA, wie in Figur 1 vermerkt, vergrößert dargestellt. Dort sind mehrere flache Verstärkungscorde gemäß der Erfindung in das elastomere Material 9 eingebettet. Die dargestellten Verstärkungscorde bestehen aus einem flachgewalzten Stahldraht 10 als Kern, um welchen acht runde Einzeldrähte 11 geschlagen sind. Um anschaulich darzustellen, daß die Einzeldrähte 11 runden Querschnitt besitzen, sind diese Einzeldrähte auch mit kreisrundem Querschnitt gezeichnet, obwohl eigentlich die Einzeldrähte 11 in der Schnittebene einen elliptischen Querschnitt aufweisen, da sie schräg durch die Schnittebene verlaufen.

Auch in den folgenden Figuren 3, 4, 5 und 6 werden die Einzeldrähte jeweils in ihrem eigentlichen Querschnitt und nicht in dem der jeweiligen Schnittebene entsprechenden Schnitt dargestellt.

In Figur 3 ist ein in den Luftreifen erfindungsgemäß einsetzbarer Verstärkungscord dargestellt, wie er auch in Figur 2 dargestellt ist. Insofern wurden auch die gleichen Ziffern benutzt. Die runden Einzeldrähte 11 sind um den flachen Stahldraht 10 als Kern derart geschlagen, daß zwischen benachbarten Einzeldrähten 11 mit Durchmesser D jeweils ein Abstand f erhalten bleibt, der erfindungsgemäß bevorzugt der Formel genügen soll:

$$f = (0,04 \div 0,12)\ D,\ \text{bzw.}$$

$$f = 0,08\ D\ .$$

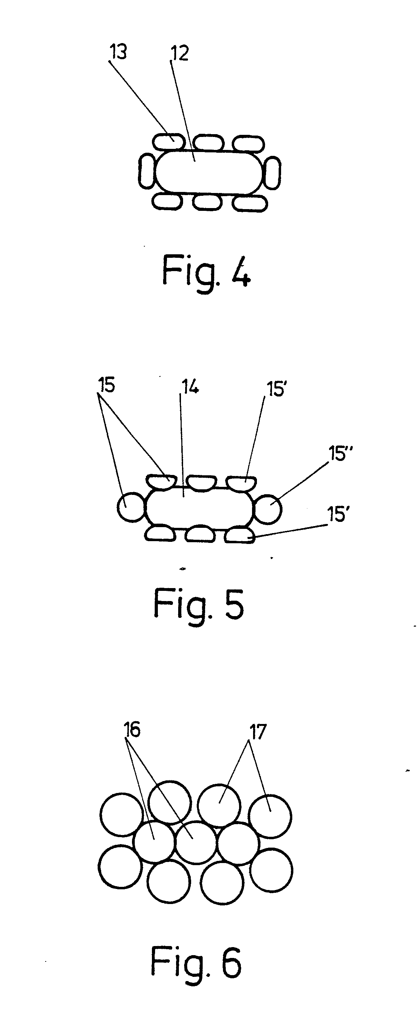

In den Figuren 4, 5 und 6 sind weitere Ausführungsformen von in den Luftreifen erfindungsgemäß einsetzbaren Verstärkungscorden dargestellt. Be beiden Verstärkungscorden gemäß Fig. 4 und 5 ist als Kern wiederum ein Flachdraht 12 bzw. 14 vorhanden. Gemäß Figur 4 sind um den Flachdraht 12 acht abgeflachte Einzeldrähte 13 geschlagen.

Gemäß Figur 5 sind um den Flachdraht 14 als Kern acht runde Einzeldrähte 15 geschlagen, wonach der so hergestellte flache Verstärkungscord flachgewalzt wurde, wodurch die in Querschnitt oben und unten liegenden Einzeldrähte 15′ verformt werden und teilweise auch in die Außenkontur des Flachdrahtes eindringen, während die außenliegenden Einzeldrähte 15″ nicht verformt wurden.

In Figur 6 wird der flache Kern durch drei nebeneinanderliegende, parallel verlaufende runde Drähte 16 gebildet, um welchen acht runde Einzeldrähte 17 geschlagen sind. Auch bei dieser Ausführungsform können die Drähte 17 abgeflacht ausgebildet sein und/oder der Verstärkungscord flachgewalzt sein.


## Beispiel

Der erfindungsgemäße Verstärkungscord wird im folgenden mit einem üblichen im Handel erhältlichen Verstärkungscord bezüglich seiner Eigenschaften verglichen.

Cord 1, ein Vergleichscord, weist die Konstruktion $12 \times 0,2 + 0,15\ F$ auf, d.h. der Cord wurde gebildet durch Zusammenschlagen von 12 Stahldrähten mit einem Einzeldurchmesser von 0,2 mm, um welche ein flacher Umwicklungsdraht, der durch Flachwalzen eines runden Drahtes mit 0,15 mm Durchmesser hergestellt wurde, gewickelt ist.

Cord 2 ist ein erfindungsgemäßer Cord der Konstruktion $1 \times 0,38\ F + 9 \times 0,194$, d.h.: Der Kern besteht aus einem flachen Draht, der durch Flachwalzen eines Stahldrahtes von 0,38 mm Durchmesser entstanden ist, wobei das Verhältnis der längeren zur kürzeren Dimension des Kernquerschnitts etwa 1,9 : 1 beträgt. Um diesen Kern sind neun runde Einzeldrähte mit einem Durchmesser von 0,194 mm geschlagen.

Die Eigenschaften dieser beiden Corde sind in der Tabelle gegenübergestellt.

Wie aus der Tabelle ersichtlich, weisen die beiden Corde in etwa dieselbe Reißkraft auf, während der Corddurchmesser bei dem erfindungsgemäßen Cord kleiner ist. Bei der Angabe des Corddurchmessers ergibt bei dem erfindungsgemäß verwendeten Verstärkungscord die erste Angabe (0,88) die größere Querschnittsdimension und die zweite Angabe (0,69) die kleinere Querschnittsdimension.

Für den Herausziehtest wurden jeweils zwei gleichartige Corde über eine Länge von 19,05 mm in einen Gummiblock von 70 mm Länge derart eingebettet und einvulkanisiert, daß an beiden Enden des Gummiblocks jeweils ein Cord aus dem Block herausragte. Beide Cordenden werden nun einem Zugversuch unterzogen, wobei die Zugkraft in N gemessen wird, bei der einer der beiden Corde aus dem Gummiblick herausgezogen wird. Nach dem Herausziehen des Cordes wird für die Einbettlänge die Bedeckung (mit Gummi bedeckte Oberfläche im Verhältnis zur Gesamtoberfläche) bestimmt. Beim Herausziehtest mit gealterter Probe wurde ein Gummiblock mit den eingebetteten und einvulkanisierten Corden, wie vorher beschrieben, hergestellt. Dieser Gummiblock wurde in gesättigtem Wasserdampf von 120°C bei 1,3 bar 16 Stunden lang künstlich gealtert. Nach einer Zwischenlagerung von mindestens 16 Stunden bei Raumtemperatur wird der Herausziehtest, wie oben beschrieben, durchgeführt.

4

Beim Streifentest wurden in eine 25,4 mm breite Gummiplatte 20 gleichartige Corde in gleichmäßigem Abstand eingebettet und einvulkanisiert. Von einer Stirnseite her wurde dann im Bereich der einvulkanisierten Corde der Gummi eingeschnitten. In einem Zugversuch wurde auf der einen Seite der angeschnittene Teil der Gummiplatte mit den Corden und auf der anderen Seite der andere angeschnittene Teil der Gummiplatte ohne Corde eingespannt. Gemessen wurde die zum Auseinanderreißen der beiden Teile erforderliche Zugkraft und die nach dem Auseinanderreißen feststellbare Bedeckung.

Beim Streifentest mit gealterter Probe, wurde eine Gummiplatte mit einvulkanisierten Corden, wie oben beschrieben, derselben Alterung unterworfen, wie sie beim Herausziehtest mit gealterter Probe durchgeführt wurde.

Die Luftdurchlässigkeit im einvulkanisierten Zustand wurde nach demselben Verfahren bestimmt, welches in der DE-OS 34 10 703 beschrieben ist. In der Tabelle ist angegeben, wieviel ml Luft in 5 Minuten durch den Prüfkörper geflossen ist.

Die Kern-Außendrahthaftung wird folgendermaßen bestimmt. Es wird jeweils ein Cord in einem Gummiblock einvulkanisiert, wobei die Einbettlänge 25,4 mm beträgt und der Cord aus dem Gummiblock herausragt. Nun wird die außenliegende Drahtlage am herausragenden Teil des Cordes entfernt, so daß aus dem Gummiblock lediglich noch der Kern (beim Vergleichscord die inneren 3 Drähte, beim erfindungsgemäßen Cord der innere Kern als Flachdraht) herausragt. Dieses Prüfstück wird einem Zugversuch unterworfen, indem der Kern aus dem Gummiblock herausgezogen wird. Gemessen wird die hierzu erforderliche Zugkraft, wobei in der Tabelle das Verhältnis der erforderlichen Zugkraft zur Reißkraft des Kerns angegeben ist.

Wie die Tabelle zeigt, sind die erfindungsgemäßen Corde in den meisten gemessenen Eigenschaften vergleichbar. Bei der Bestimmung der Steifheit ergibt sich in Richtung der größeren Querschnittsdimension eine mehr als doppelt so große Steifheit (78) als bei dem Vergleichscord, während in Richtung der kürzeren Querschnittsdimension nahezu die gleiche Steifheit wie beim Vergleichscord festgestellt werden kann. Der erfindungsgemäße Cord weist im einvulkanisierten Zustand überhaupt keine Luftdurchlässigkeit auf. Überraschenderweise ist bei dem erfindungsgemäßen Cord gegenüber dem Vergleichscord die Kern-Außendrahthaftung auf einen 25-fachen Wert angestiegen.

Der erfindungsgemäße Luftreifen weist somit hinsichtlich der Einbettung im elastomeren Material wesentlich bessere Eigenschaften auf wie herkömmliche Corde, wodurch Kapillarkorrosion besser vermieden wird. Außerdem weist der erfindungsgemäße Luftreifen gute Ermüdungswerte, gute Formstabilität wie auch eine hohe dynamische Beanspruchbarkeit auf. Da der im Luftreifen eingebettete Cord geringere Querschnittsdimension aufweist als herkömmliche Corde, ist zur Herstellung der Luftreifen auch weniger elastomeres Material erforderlich. Auch weist der erfindungsgemäße Luftreifen optimales Verhalten hinsichtlich des Druckmoduls in lateraler Richtung auf.

## T a b e l l e

| | Cord 1 (Vergleich) | Cord 2 (erfindungsgemäß) |
|---|---|---|
| Konstruktion | 12 x 0,2 + 0,15 F | 1 x 0,38 F + 9 x 0,194 |
| Cord-Durchmesser | 1,04 | 0,88 <br> 0,69 |
| Reißkraft (N) | 1155 | 1170 |
| Reißdehnung (%) | 2,6 | 2,1 |
| Herausziehtest <br> Zugkraft (N) <br> Bedeckung(%) | <br> 586 <br> 87 | <br> 585 <br> 99 |
| Herausziehtest <br> mit gealterter Probe <br> Zugkraft (N) <br> Bedeckung(%) | <br> <br> 618 <br> 82 | <br> <br> 625 <br> 88 |
| Streifentest <br> Zugkraft (N) <br> Bedeckung(%) | <br> 67 <br> 95 | <br> 79 <br> 100 |
| Streifentest <br> mit gealterter Probe <br> Zugkraft (N) <br> Bedeckung (%) | <br> <br> 60 <br> 100 | <br> <br> 85 <br> 95 |
| Steifheit <br> Taber-Stiffness <br> (TSU) | <br> 36 | <br> 78 <br> 34 |
| Luftdurchlässigkeit <br> im einvulkanisierten <br> Zustand <br> mL/5 min | <br> <br> <br> 21 | <br> <br> <br> O |
| Kern-Außendrahthaftung <br> % | 4 | 100% |

**Ansprüche**

1. Luftreifen mit mindestens einem aus mehreren Stahldrähten zusammengesetzten, flach ausgebildeten Verstärkungscord, der eine längere und eine kürzere Querschnittsdimension aufweist, wobei der Verstärkungscord aus einem flachen, ungedrehten Kern besteht, um welchen mindestens sechs Einzeldrähte geschlagen sind, dadurch gekennzeichnet, daß der flache Verstärkungscord (6, 7) im Gürtel und/oder in der Decke derart angeordnet ist, daß die größere Querschnittsdimension des Verstärkungscordes zumindest annähernd parallel zur Gürtel-bzw. Deckenkontur angeordnet ist.

2. Luftreifen nach Anspruch 1, dadurch gekennzeichnet, daß der Kern des Verstärkungscordes aus mehreren parallel zueinander angordneten Drähten (16) gebildet ist.

3. Luftreifen nach Anspruch 1, dadurch gekennzeichnet, daß der Kern des Verstärkungscordes aus einem flachen Stahldraht (10, 12, 14) besteht.

4. Luftreifen nach einem oder mehreren der Ansprüche 1 bis 3, dadurch gekennzeichnet, daß das Verhältnis der längeren zur kürzeren Dimension des Querschnitts des Kerns zwischen 4 : 1 und 1,5 : 1 liegt.

5. Luftreifen nach einem oder mehreren der Ansprüche 1 bis 4, dadurch gekennzeichnet, daß die um den Kern (12, 14, 16) geschlagenen Einzeldrähte (13, 15, 17) abgeflacht sind.

6. Luftreifen nach einem oder mehreren der Ansprüche 1 bis 5, dadurch gekennzeichnet, daß das Verhältnis der längeren zur kürzeren Abmessung des Querschnitts der abgeflachten Einzeldrähte zwischen 4 : 1 und 1,5 : 1 liegt.

7. Luftreifen nach einem oder mehreren der Ansprüche 1 bis 6, dadurch gekennzeichnet, daß der Querschnitt des Kerns und/oder der abgeflachten Einzeldrähte elliptisch ausgebildet ist.

8. Luftreifen nach einem oder mehreren der Ansprüche 1 bis 7, dadurch gekennzeichnet, daß der Kern und/oder die abgeflachten Einzeldrähte einen annähernd rechteckigen Querschnitt aufweisen, dessen Ecken gerundet sind.

9. Luftreifen nach einem oder mehreren der Ansprüche 1 bis 6, dadurch gekennzeichnet, daß die abgeflachten Stahldrähte (10,12,14) und/oder die abgeflachten Einzeldrähte (13) durch Flachwalzen von runden Stahldrähten hergestellt sind.

10. Luftreifen nach einem oder mehreren der Ansprüche 5 bis 9, dadurch gekennzeichnet, daß die abgeflachten Einzeldrähte (13) derart um den Kern (12) gewickelt sind, daß die längere Abmessung des Einzeldrahtquerschnitts den Kern ständig berührt.

11. Luftreifen nach einem oder mehreren der Ansprüche 1 bis 10, dadurch gekennzeichnet, daß jeder Verstärkungscord zusätzlich flachgewalzt ist.

12. Luftreifen nach einem oder mehreren der Ansprüche 1 bis 11, dadurch gekennzeichnet, daß der Abstand f benachbarter Einzeldrähte zwischen 4 und 12% ihres Drahtdurchmessers D beträgt.

13. Luftreifen nach Anspruch 12, dadurch gekennzeichnet, daß der Abstand benachbarter Einzeldrähte 8% ihres Drahtdurchmessers beträgt.

14. Luftreifen nach einem oder mehreren der Ansprüche 1 bis 13, dadurch gekennzeichnet, daß die Einzeldrähte eine Schlaglänge von 10 bis 20 mm aufweisen.

15. Luftreifen nach einem oder mehreren der Ansprüche 1 bis 14, dadurch gekennzeichnet, daß zumindest ein Teil der Verstärkungscorde jeweils von mindestens einem Umschlingungsdraht wendelförmig umwickelt ist.

0 264 071

Fig.1

11  10          9

## Fig. 2

11      10

D

f

## Fig. 3

13  12

Fig. 4

15  14  15'

15''

15'

15'

Fig. 5

16  17

Fig. 6